(19) Europäisches Patentamt
European Patent Office
Office européen des brevets

(11) Publication number: **0 135 761 B1**

## EUROPEAN PATENT SPECIFICATION

(45) Date of publication of patent specification: **05.06.91**

(51) Int. Cl.⁵ **G01J 3/28, G01J 3.02**

(21) Application number: **84109506.0**

(22) Date of filing: **09.08.84**

(54) Spectrophotometer.

(30) Priority: **30.08.83 US 527884**

(43) Date of publication of application:
**03.04.85 Bulletin 85/14**

(45) Publication of the grant of the patent:
**05.06.91 Bulletin 91/23**

(84) Designated Contracting States:
**BE CH DE FR GB IT LI NL**

(56) References cited:
**EP-A- 104 333**
**US-A- 3 927 944**
**US-A- 4 095 899**

**REVIEW OF SCIENTIFIC INSTRUMENTS, vol. 51, no. 10, October 1980, pages 1330-1334, New York, US; D.L. ALLENSWORTH "Interferometer for the determination of strains due to domain switching in ferroelectrics"**

(73) Proprietor: **THE PERKIN-ELMER CORPORATION**
**761 Main Avenue**
**Norwalk Connecticut 06856-0181(US)**

(72) Inventor: **Young, Eugene F.**
**28 Grumman Avenue**
**Wilton Connecticut 06897(US)**

(74) Representative: **Patentanwälte Grünecker, Kinkeldey, Stockmair & Partner**
**Maximilianstrasse 58**
**W-8000 München 22(DE)**

## Description

The present invention relates to a spectrophotometer, with an interferometer, said interferometer having a beamsplitter; means for directing the light beam from a radiation source onto said beamsplitter; means for directing the interferometer exit beam resulting from the combination of the partial beams generated by the beamsplitter to a sample position; and means for detecting said exit light beam after said exit light beam passes said sample position.

In particular, the present invention relates to a Fourier Transform Spectrophotometer. In general, Fourier Transform Spectrophotometers are primarily utilized in the field of infrared analysers. Hence, such spectrophotometers are generally known as Fourier Transform Infrared (FT/IR) Spectrophotometers. The primary advantage of FT/IR spectrophotometers is that entire wavelength ranges can be analysed faster, with more energy throughput and with a reduced background stray light. Such advantages are well-known in the spectrophotometer art and this knowledge gives rise to the increasing use of FT/IR spectrophotometers. An apparatus as mentioned at the beginning for simultaneously recording multiple FT/IR signals is known from the EP-A-104333.

Conventionally, FT/IR spectrophotometers can be either single beam instruments or double beam instruments. In the single beam instrument the example is positioned in the path of the sampling light beam and subsequently removed or otherwise used to characterize a background signal. Thus, when the sample cell is removed or for example, when the sample cell is filled with a reference fluid, the background which exists during a particular measurement can be ascertained and subsequently subtracted from the signal received when the sample is inserted in the path. Single beam instruments frequently require the disruption of the control environment in which the FT/IR functions to switch from a reference measurement to a sample measurement. Consequently, the noise measurement is neither simultaneous with the sample measurement nor is it performed under identical conditions.

As a consequence of this inaccuracy, double beam systems are known in the art. In such a system one beam is directed through the sample cell or sample material whereas a second beam, following an identical similar optical path except for that portion of the path passing through the sample, is introduced. Normally, this is accomplished by positioning rotatable, or otherwise movable mirrors, or other beam direction optical elements both before and after the sample cell. In such a fashion, the incoming or incident beam directed to the sample cell can be redirected along a path similar in length as that of the sample beam but which path does not have the sample therein. Thus, by optically subtracting the signal representative of the incident beam having passed through the sample from the beam having passed through the reference, a more accurate measurement is achieved.

Although a double beam system is inherently more accurate and convenient than a single beam system, it nevertheless has a number of drawbacks when such a system is used for high sensitivity or very accurate measurements. One difficulty of the FT/IR spectrophotometers presently known is that the sample beam and reference beam do not always impinge on the same area of the detector surface. This results because of the slight path differences generated by the presence of the sample in the sample beam path. Hence, the accuracy of the two measurements is reduced since different areas of the detector may produce slight differences in signal output. This problem is particularly difficult when the area of a conventional Jacquinot stop is reduced in size to increase the resolution. In addition, another image mismatch occurs at the beamsplitter of the interferometer of an FT/IR. Consequently, the beam division of the beamsplitter may be slightly different depending on the particular Jacquinot stop setting used. Such image mismatching, with respect to the beamsplitters, occurs primarily because the Jacquinot stop is focused on the detector and consequently the image thereof throughout the system, i.e., on the beamsplitter, as well as various other points in the optical system, does not remain fixed when the resolution is varied via the Jacquinot stop.

It is the object of the present invention to provide a spectrophotometer, in particular a dual beam FT/IR spectrophotometer, wherein the entire available detector aperture is illuminated regardless of the resolution setting of the instrument.

The solution of this inventive object is characterised in that the means for directing said light beam to the beamsplitter comprises a variable aperture for controlling the instrument resolution and a condensor means for condensing said light beam passed through said aperture and for directing said light beam onto the same surface portion of the beamsplitter regardless of the setting of the variable aperture, and the means for directing the resulting exit beam to the centre position comprises means for imagining said beamsplitter at the sample position.

By this inventive solution a spectrophotometer, in particular a dual beam FT/IR spectrophotometer, is provided which produces enhanced spectrophotometer accuracy.

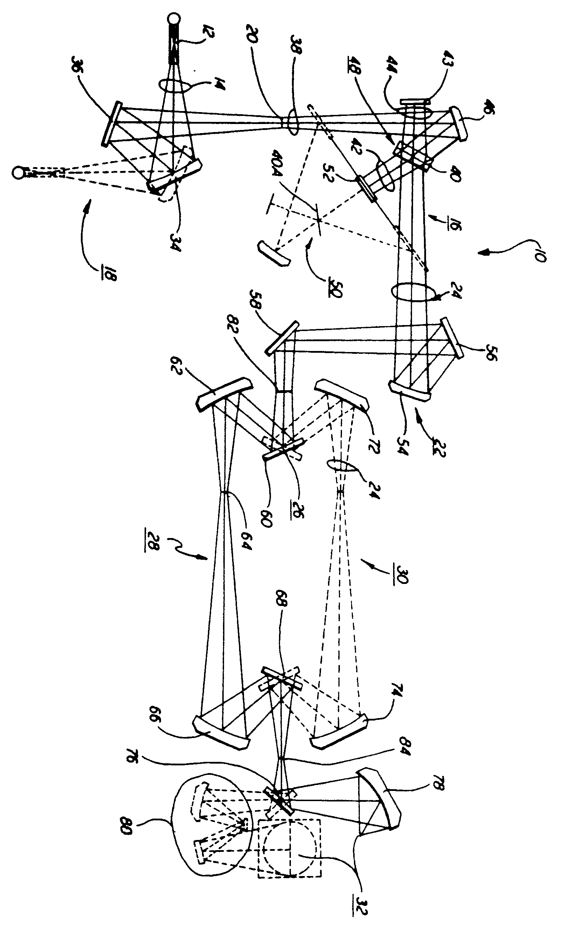

Brief Description of the Drawing

The single Figure of the drawing is an optical layout of a spectrophotometer, not drawn to scale, embodying the principles of the present invention.

Detailed Description of the Invention

A spectrophotometer, generally indicated at 10 in the drawing and embodying the principles of the present invention, includes a source 12 which provides a source beam 14 of radiation including the spectral wavelengths of interest. The spectrophotometer 10 also includes an interferometer 16 as well as means 18 for directing the source beam 14 thereto through a variable aperture 20. The spectrophotometer 10 further includes means 22 for directing the beam 24 exiting from the interferometer 16 to a beam path selector 26 which routes the exiting beam 24 through either a sample path 28 or a reference path 30 prior to being directed to a detector means 32. As more fully explained below the beam 24 fills the active area of the detector means 32.

In the preferred embodiment, the source 12 is a heated wire which provides radiation between the wavelengths of 5000 and 50 wavenumbers in the infrared spectrum. As more fully discussed below the source 12 can be positioned either within the enclosure of a spectrophotometry instrument or external thereof.

The radiation from the source 12 falls on the directing means 18 which, preferably, includes a toroidal reflector 34 for directing the source beam 14 onto a first flat mirror 36. The first toroidal reflecting surface 34 and flat mirror 36 are positioned such that the resultant beam from the first flat mirror 36 is directed toward the variable aperture 20.

The variable aperture 20, such as, for example, a Jacquinot stop, is positioned in the path of the source beam 14 and thereby controls the ultimate resolution of the instrument by controlling the cross-sectional area of the source beam 14 passing therethrough. Further, the resolution is inversely related to the aperture area, i.e., the larger the aperture area the lesser resolution achieved and vice-versa. Resolution, as used herein, is taken to mean the ability of an instrument to separate closely adjacent peaks.

The apertured beam 38 passing through the Jacquinot stop enters the interferometer 16 which includes at least a first beamsplitter 40 which redirects the incoming light thereon into two arms 42 and 44, one arm 42 having a variable length. The variable length of the one arm 42 allows the interferometer 16 to produce an interference pattern in the resultant exit light beam 24. In this embodiment, the beam passing through the variable aperture 20 is directed onto a paraboloid reflector 46 which condenses the image and directs the light beam onto the beamsplitter 40. By the presence of this condensing surface, the size of the beamsplitter 40 can be considerably reduced in size to accomodate manufacturing techniques as well as to reduce the expense thereof. Further, the use of the paraboloid reflector 46 ensures that, regardless of the setting of the variable aperture 20, the incoming beam will be directed to the same surface portion of the beamsplitter 40. Consequently, errors due to the employment of various parts of the beamsplitter surface for various resolution apertures is avoided. In the preferred embodiment, the interferometer 16 is a conjugate interferometer having first and second interferometers, 48 and 50 the common element of which is the moving mirror 52 of the respective variable length arms 42. In such an embodiment, the beamsplitter 40A of the second interferometer 50 has a wavelength operating range which is different from the wavelength operating range of the first beamsplitter 40.

The resultant exit beam 24 of the interferometer 16 impinges upon the means 22 for directing the exit beam which, in one preferred embodiment, includes a toroidal mirror 54 for condensing the resultant exit beam 24 and directing it to a flat mirror 56. Preferably, for space considerations, the flat mirror 56 then directs the beam 24 onto another flat mirror 58 which directs the beam 24 into the beam path selector 26.

In the preferred embodiment, the beam path selector 26 is a flat mirror 60 rotatable between two fixed positions. In a first position, the incoming beam 24 is reflected therefrom toward a first sample path toroid reflector 62 which condenses and forms the image of the beamsplitter 40 into the plane of the sample cell 64. The other end of the sample path is formed by a second sample path toroidal mirror 66 which condenses the expanding beam from the sample and directs it onto a second rotatable flat mirror 68. In the second, or referencing path 30, the first beam selecting flat mirror 60 directs the incoming beam to a first reference beam toroidal reflector 72 which directs the beam 24 to a second toroidal reflector 74 and subsequently onto the second beam path directing mirror 68. In order to ensure accurate optical matching of the reference beam from the sample beam, it is preferred that the toroidal reflectors, 62 and 66 of the sample beam path and the toroidal reflectors, 72 and 74 of the reference beam path be optically identical.

The resultant beam is imaged via either of the second toroidal mirrors, 66 or 74 and, in the preferred embodiment, directed to a detector selector mirror 76 which is rotatable between a first and second position. Regardless of the position, the detector selector mirror 76 directs the beam to either one of a first or a second identical ellipsoidal reflecting surfaces, 78 or 80, which forms the beam such that the entire active area of the detector means 32 selected is illuminated.

In more specific operational embodiment, the toroidal reflector 34 of the beam directing means 18 has a focal length of 97.3 millimeters and is positioned at an off-axis angle of 40 degrees. As used herein, the phase off-axis angle is defined as the included angle between an incoming central ray of an incident beam and the reflected central ray thereof. The beam directing paraboloid reflector 46 of the interferometer 16 has a focal length of 222.8 millimeters and an off-axis angle of 36 degrees, and the toroidal reflector 54 which directs the exit beam 24 of the interferometer 16 has a focal length of 360 millimeters and is positioned at an off-axis angle of 40 degrees. The four toroidal reflecting surfaces, 62, 66, 72 and 74 defining the reference beam path 30 and the sample beam path 28 all have focal lengths equal to 121.4 millimeters and are positioned at off-axes angles of 50 degrees. Finally, the ellipsoidal mirrors 78 and 80 of the detector imaging means have equivalent focal lengths of 40.3 millimeters and are positioned at off-axes angles of 60 degrees. Preferably, the detector means 32 include an MCT (Mercury/Cadmium/Telluride) and a pyroelectric detector, i.e., a temperature measuring opto-electric device.

The optical arrangement recited above is advantageous in that both a detector image and a Jacquinot stop image are positioned relatively close to the source whereby the source can either be placed inside a spectrophotometer cabinet between the images or it can be placed externally the instrument proper and nevertheless, fill the field of view of the detector image.

Furthermore, an image of the Jacquinot stop 20 formed between the second flat mirror 58 of the exit beam directing means 22 and the rotatable beam selector mirror 60 positioned can be used as a position for a polarizer 82. Further, a real image of the detector means 32, although reduced in size, is formed subsequent to the beam path combining flat mirror 68 which real image can serve as a location for a filter positioning mechanism 84 which equalizes the energy from the reference and sample beam paths 28 and 30.

## Claims

1. A spectrophotometer, with an interferometer (16), that interferometer having a beamsplitter (40); means (18,20,46) for directing a light beam (14) from a radiation source onto said beamsplitter (40); means (22,58,60,62) for directing the interferometer exit beam (24) resulting from the combination of the partial beams (42,44) generated by the beamsplitter to a sample position (64); and means (32) for detecting said exit light beam (24) after said exit light beam passes said sample position,

**characterized in that**

the means (18,20,46) for directing said light beam (14) to said beamsplitter (40) comprises a variable aperture (20) for controlling the instrument resolution and a condensor means (46) for condensing said light beam (14) passed through said aperture (20) and for directing said light beam (14) on to the same surface portion of the beamsplitter (40) regardless of the setting of the variable aperture (20), and the means (22,58,60,62) for directing the resultant exit beam (24) to the sample position (64) comprises means (22) for imaging said beamsplitter (40) at the same sample position (64).

2. Spectrophotometer as claimed in Claim 1 further comprising:

   means for imaging said beamsplitter (40) on said detector means (32), said means for imaging said beamsplitter being in the path of the light beam (28) between said sample position (64) and said detector means (32).

3. Spectrophotometer as claimed in Claim 1 or 2 further comprising:

   means, between said sample position (64) and said means for imaging said beamsplitter, for imaging said beamsplitter (40) at a filter position (84).

4. Spectrophotometer as claimed in Claim 1 wherein said interferometer includes:

   a conjugate interferometer (16) having first and second interferometers (48,50) having different ranges of operating wavelengths.

5. Spectrophotometer as claimed in Claim 1 wherein all beam directing optical elements are single surface reflectors.

6. Spectrophotometer as claimed in Claim 1 further comprising:

   means for directing the exit beam (24) of said interferometer (16) to either a sample path (28) or a reference path (30).

7. Spectrophotometer as claimed in Claim 6 wherein said means for directing the exit beam (24) to either a sample path (28) or a reference path (30) includes a flat mirror (60), said flat mirror having a first position whereat said exit beam is directed through said sample path (28) and a second position whereat that exit beam is directed through said reference path (30).

8. Spectrophotometer as claimed in Claim 1 wherein said detecting means (32) includes an ellipsoidal reflector (78,80).

9. Spectrophotometer as claimed in Claim 1 wherein said detecting means (32) includes means (76) for selectively directing said light beam to one of a number of detectors (32).

10. Spectrophotometer as claimed in Claim 9 wherein said number of detectors includes a pyroelectric detector and an MCT detector.

11. Spectrophotometer according to at least one of the foregoing claims, wherein the condensor means comprising a paraboloid reflector (46).

**Revendications**

1. Spectrophotomètre, avec un interféromètre (16), cet interféromètre ayant un séparateur de faisceau (40); des moyens (18, 20, 46) pour envoyer un faisceau de lumière (14) en provenance d'une source de rayonnement sur ledit séparateur de faisceau (40); des moyens (22, 58, 60, 62) pour envoyer le faisceau de sortie (24) de l'interféromètre, résultant de la combinaison des faisceaux partiels (42, 44) générés par le séparateur de faisceau, sur une position d'échantillon (64); et des moyens (32) pour détecter ledit faisceau lumineux de sortie (24) après que ledit faisceau lumineux de sortie passe par ladite position d'échantillon, caractérisé en ce que les moyens (18, 20, 46) pour envoyer ledit faisceau lumineux (14) sur ledit séparateur de faisceau (40) comprennent une ouverture variable (20) pour contrôler la résolution de l'instrument et un moyen à condenseur (46) pour concentrer ledit faisceau lumineux (14) passé à travers ladite ouverture (20) et pour envoyer ledit faisceau lumineux (14) sur la même portion de surface du séparateur de faisceau (40) indifféremment du réglage de l'ouverture variable (20), et en ce que les moyens (22, 58, 60, 62) pour envoyer le faisceau de sortie résultant (24) sur la position d'échantillon (64) comprennent des moyens (22) pour former l'image dudit séparateur de faisceau (40) à la même position d'échantillon (64).

2. Spectrophotomètre selon la revendication 1, comprenant de plus :
   - des moyens pour former l'image dudit séparateur de faisceau (40) sur lesdits moyens détecteurs (32), lesdits moyens pour former l'image dudit séparateur de faisceau étant dans le chemin du faisceau lumineux (28) entre ladite position d'échantillon (64) et lesdits moyens détecteurs (32).

3. Spectrophotomètre selon la revendication 1 ou 2, comprenant de plus :
   - des moyens, entre ladite position d'échantillon (64) et lesdits moyens pour former l'image dudit séparateur de faisceau, pour former l'image dudit séparateur de faisceau (40) à une position de filtre (84).

4. Spectrophotomètre selon la revendication 1, dans lequel ledit interféromètre comprend
   - un interféromètre conjugué (16) ayant des premier et deuxième interféromètres (48, 50) ayant différentes gammes de longueurs d'onde de fonctionnement.

5. Spectrophotomètre selon la revendication 1, dans lequel tous les éléments optiques d'envoi de faisceau sont des réflecteurs à une seule surface.

6. Spectrophotomètre selon la revendication 1, comprenant de plus :
   - des moyens pour envoyer le faisceau de sortie (24) dudit interféromètre (16) soit sur un chemin d'échantillon (28), soit sur un chemin de référence (30).

7. Spectrophotomètre selon la revendication 6, dans lequel lesdits moyens pour envoyer le faisceau de sortie (24) soit sur un chemin d'échantillon (28), soit sur un chemin de référence (30), comportent un miroir plan (60), ledit miroir plan ayant une première position à laquelle ledit faisceau de sortie est envoyé à travers ledit chemin d'échantillon (28) et une deuxième position à laquelle ledit faisceau de sortie est envoyé à travers ledit chemin de référence (30).

8. Spectrophotomètre selon la revendication 1, dans lequel lesdits moyens de détection (32) comportent un réflecteur elliptique (78, 80).

9. Spectrophotomètre selon la revendication 1, dans lequel lesdits moyens de détection (32) comportent des moyens (76) pour envoyer sélectivement ledit faisceau lumineux sur l'un des nombreux détecteurs (32).

10. Spectrophotomètre selon la revendication 9, dans lequel ces nombreux détecteurs comportent un détecteur pyroélectrique et un détecteur MCT.

11. Spectrophotomètre selon au moins une des revendications précédentes, dans lequel le moyen à condenseur comprend un réflecteur parabolique (46).

**Ansprüche**

1. Ein Spektrophotometer, mit einem Interferometer (16), wobei das Interferometer eine Strahlaufspaltungseinrichtung (40) aufweist; einer Einrichtung (18, 20, 46) zum Richten eines Lichtstrahles (14) aus einer Strahlungsquelle auf die Strahlaufspaltungseinrichtung (40); einer Einrichtung (22, 58, 60, 62) zum Richten des Interferometeraustrittsstrahles (24), der sich aus der Kombination des durch die Strahlaufspaltungseinrichtung erzeugten Teilstrahlen (42, 44) ergibt, zu einer Probenposition (64); und einer Einrichtung (32) zum Erfassen des Austrittslichtstrahles (24), nachdem der Austrittslichtstrahl die Probenposition passiert hat, **dadurch gekennzeichnet,** daß die Einrichtung (18, 20, 46) zum Richten des Lichtstrahles (14) zu der Strahlaufspaltungseinrichtung (40) eine variable Blende (20) zum Steuern der Instrumentenauflösung und eine Kondensoreinrichtung (46) zum Konzentrieren des Lichtstrahles (14), welcher durch die Blende (20) getreten ist, und zum Richten des Lichtstrahles (14) auf denselben Oberflächenbereich der Strahlaufspaltungseinrichtung (40) ungeachtet der Einstellung der variablen Blende umfaßt, und daß die Einrichtung (22, 58, 60, 62) zum Richten des resultierenden Austrittsstrahles (24) zu der Probenposition (64) eine Einrichtung (22) zum Abbilden der Strahlaufspaltungseinrichtung (40) an der gleichen Probenposition (64) umfaßt.

2. Spektrophotometer nach Anspruch 1, welches ferner umfaßt: eine Einrichtung zum Abbilden der Strahlaufspaltungseinrichtung (40) auf der Detektoreinrichtung (32), wobei sich die Einrichtung zum Abbilden der Strahlaufspaltungseinrichtung in dem Weg des Lichtstrahles (28) zwischen der Probenposition (64) und der Detektoreinrichtung (32) befindet.

3. Spektrophotometer nach Anspruch 1 oder 2, welches ferner umfaßt: eine Einrichtung, zwischen der Probenposition (64) und der Einrichtung zum Abbilden der Strahlaufspaltungseinrichtung, zum Abbilden der Strahlaufspaltungseinrichtung (40) an einer Filterposition (84).

4. Spektrophotometer nach Anspruch 1, wobei das Interferometer enthält: ein konjugiertes Interferometer (16) mit einem ersten und einem zweiten Interferometer (48, 50) mit unterschiedlichen Betriebswellenlängenbereichen.

5. Spektrophotometer nach Anspruch 1, wobei alle strahlausrichtenden optischen Elemente Einzeloberflächenreflektoren sind.

6. Spektrophotometer nach Anspruch 1, welches ferner umfaßt: eine Einrichtung zum Richten des Austrittsstrahles (24) des Interferometers (16) entweder auf einen Probenweg (28) oder einen Referenzweg (30).

7. Spektrophotometer nach Anspruch 6, wobei die Einrichtung zum Richten des Austrittsstrahles (24) entweder auf einen Probenweg (28) oder einen Referenzweg (30) einen ebenen Spiegel (60) enthält und der ebene Spiegel eine erste Position, bei welcher der Austrittsstrahl entlang dem Probenweg (28) gerichtet ist, und eine zweite Position, bei welcher der Austrittsstrahl durch den Referenzweg (30) gerichtet ist, aufweist.

8. Spektrophotometer nach Anspruch 1, wobei die Detektoreinrichtung (32) einen Ellipsoidreflektor (78, 80) enthält.

9. Spektrophotometer nach Anspruch 1, wobei die Detektoreinrichtung (32) eine Einrichtung (76) zum selektiven Richten des Lichtstrahles auf einen aus einer Anzahl von Detektoren (32) enthält.

10. Spektrophotometer nach Anspruch 9, wobei die Anzahl der Detektoren einen pyroelektrischen Detektor und einen MCT-Detektor umfaßt.

11. Spektrophotometer nach wenigstens einem der vorhergehenden Ansprüche, wobei die Kondensoreinrichtung einen Paraboloidreflektor (46) umfaßt.